# EUROPÄISCHE PATENTSCHRIFT

(11) **EP 1 287 962 B1**
(45) Veröffentlichungstag und Bekanntmachung des Hinweises auf die Patenterteilung: **11.04.2007**
(21) Anmeldenummer: 02013769.1
(22) Anmeldetag: 21.06.2002
(51) Int. Cl.: B29C 45/17

(54) **Platte einer Spritzgiessmaschine**
Platen of an injection moulding machine
Plateau d'une machine à mouler par injection

(30) Priorität: 30.08.2001 DE 20114341 U
(43) Veröffentlichungstag der Anmeldung: 05.03.2003
(73) Patentinhaber: Adcuram Maschinenbauholding GmbH, 80333 München (DE)
(72) Erfinder: Füller, Klaus, Dipl.-Ing., 19061 Schwerin (DE); Elsner, Lothar, 19075 Pampow (DE)
(74) Vertreter: Gosdin, Michael

(56) Entgegenhaltungen:
- EP-A- 0 747 196
- WO-A-98/41380
- DE-A- 19 608 135
- PATENT ABSTRACTS OF JAPAN vol. 1997, no. 02, 28. Februar 1997 (1997-02-28) -& JP 08 267463 A (MITSUBISHI HEAVY IND LTD), 15. Oktober 1996 (1996-10-15)

## Beschreibung

Die Erfindung betrifft eine Platte, insbesondere Schließ- oder Düsenplatte, einer Spritzgießmaschine zur Aufnahme eines Werkzeuges, die einen vorderen und einen hinteren Bereich umfasst, der über Seitenwände und Stege verbunden ist und Bohrungen für die Aufnahme von Holmen aufweist. Eine derartige Platte ist z.B. aus der JP-A-08267463 bekannt.

Derartige Platten werden bei Spritzgießmaschinen eingesetzt, um je eine Werkzeughälfte eines Spritzgießwerkzeuges aufzunehmen. Vor dem Einbringen der plastischen Spritzgießmasse wird eine der beiden Platten über Holme geführt, auf die andere zu bewegt und so die Werkzeughälften geschlossen. Die beiden Werkzeughälften bilden die Kavität für das herzustellende Formteil.

Beim anschließenden Einspritzvorgang werden erhöhte Druckkräfte erzeugt, die dazu neigen, die beiden Werkzeughälften wieder auseinander zu drücken. Um dies zu verhindern werden die geschlossenen Werkzeughälften mit einer vorgegebenen Kraft zusammengehalten.

Diese Zuhaltekraft erzeugt sowohl eine Biegebeanspruchung in den Holmen, aber auch eine Durchbiegung auf die beiden Platten. Bedingt durch diese Biegung können die beiden Werkzeughälften nicht mehr plan aufeinander liegen, was zu Qualitätseinbußen oder Fehlern im Formteil führt.

**Aufgabe** der Erfindung ist es, die Konstruktion der Platte derart zu verbessern, dass die Durchbiegung minimiert wird.

Die Aufgabe der Erfindung wird in Verbindung mit dem Oberbegriff des Anspruchs 1 **dadurch gelöst,** dass die Stege (4) mit mindestens einer Aussparung (5) versehen sind, die sich bis in den Bereich der Bohrung (6) erstreckt.

Durch diese Ausgestaltung wird es ermöglicht, dass der vordere Bereich (1) der Platte, eine weitgehend durchgezogene Wand, relativ elastisch wird und dadurch eine Biegung zulässt. Diese Biegelinie verläuft jedoch genau entgegengesetzt der Biegelinie, die durch Biegung der Holme in der Platte erzeugt wird. Diese auf das Gesamtsystem bezogene negative Biegung relativiert sich folglich in der Verformung des vorderen Bereiches (1) der Platte und geht daher gegen null.

Dieser Effekt wird besonders dann erreicht, wenn die Aussparung (5) in der Nähe des vorderen Bereiches (1) der Platte angeordnet ist, da dann die Widerstandsmomente am kleinsten sind.

Der vordere Bereich (1) der Platte ist für die Aufnahme eines Spritzgießwerkzeuges (8), insbesondere für die bewegliche Hälfte des Werkzeuges, vorgesehen.

Die Seitenwände (3) der Platte können mit Öffnungen (7) versehen sein, über die beispielsweise das Kernmaterial nach der Herstellung der Platte ausgebracht werden kann, da die Platten bevorzugt im Gießverfahren hergestellt werden. Es kann aber auch eine Öffnung (7) für den Eingriff eines Verriegelungsmechanismusses für die beiden Werkzeughälften vorgesehen sein oder direkt ein Sandkern beim Gießen gelagert werden.

Es kann hierdurch auch die Steife der Wände besser den Anforderungen angepasst werden oder die Zugänglichkeit zum Auswerfersystem - System, dass für die Entformung des gefertigten Teiles zuständig ist - geschaffen werden. Ein weiterer Vorteil der Öffnungen (7) liegt darin Material und Gewicht einzusparen.

Vorteilhafterweise sind die Stege (4) im vorderen Bereich der Platte untereinander verbunden, um deren Steifigkeit zu erhöhen. Dies kann beispielsweise durch einen Mittelkern im Zentrum der Platte erreicht werden.

In den Zeichnungen ist schematisch eine Platte dargestellt, es zeigt
- Fig. 1: die Seitenansicht einer Platte,
- Fig. 2: einen Schnitt durch die Platte gemäß Figur 1,
- Fig. 3: eine Schnitt durch einen Steg der Platte gemäß Figur 2, und
- Fig. 4: zeigt einen anderen Schnitt durch die Platte gemäß Figur 1.

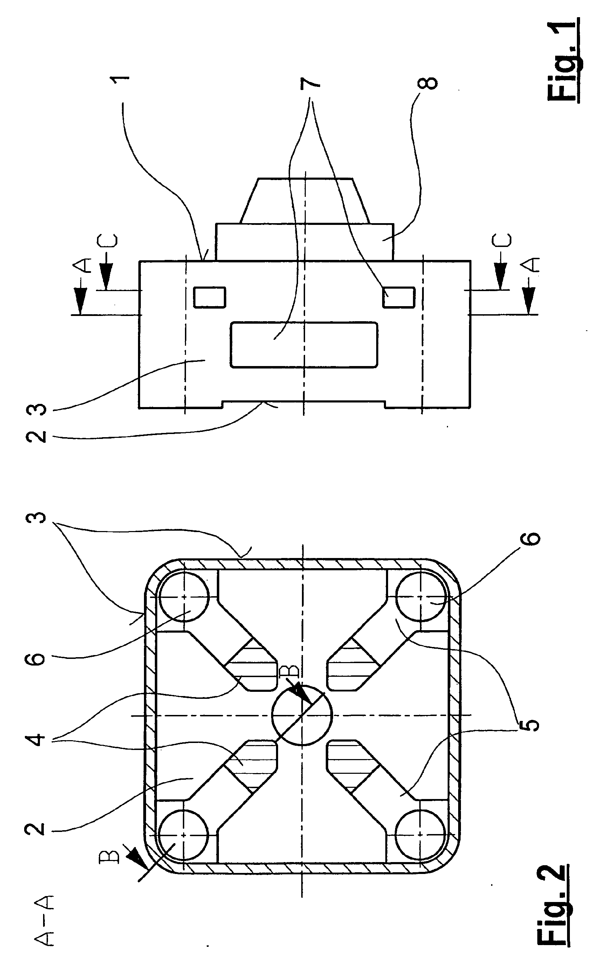

In Figur 1 ist eine Seitenansicht der Platte zu sehen. Im vorderen Bereich 1 der Platte ist eine Hälfte eines Spritzgießwerkzeuges 8 mittels einer strichpunktierten Linie angedeutet. Die Platte weist einen hinteren Bereich 2 auf, der über die Seitenwände 3 mit dem vorderen Bereich 1 verbunden ist. Sowohl der vordere als auch der hintere Bereich der Platte ist als weitgehend durchgängige Wand ausgeführt. Die Seitenwand 3 ist mit Öffnungen 7 versehen, durch die beispielsweise die Verriegelung für die beiden Werkzeughälften geführt werden kann. Eine weitere Verbindung zwischen dem hinteren 2 und dem vorderen Bereich 1 der Platte ist über Stege 4 realisiert, die in der Schnittdarstellung gemäß Figur 2 zu sehen sind. Der Verlauf der Schnittdarstellung in Figur 2 ist in Figur 1 mit A-A gekennzeichnet.

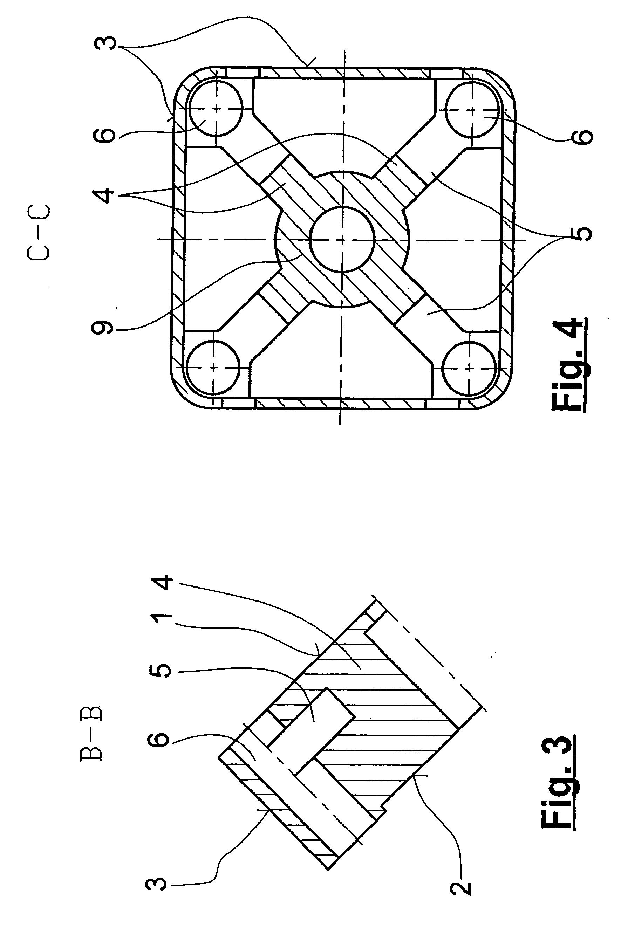

Aus Figur 2 sind auch die Bohrungen 6 ersichtlich, durch die die Holme geführt werden. Die Stege 4 sind am hinteren Bereich 2 der Platte angebunden und stützen sich um die Bohrung 6 herum an den Seitenwänden 3 ab. Im Zentrum der Platte können die Stege 4 über einen Mittelkern verbunden werden, wie aus der Schnittdarstellung in Figur 4 zu entnehmen ist.

Um die Elastizität des vorderen Bereiches 1 der Platte zu ermöglichen sind die Stege 4 mit Aussparungen 5 versehen, die sich mindesten bis in den Bereich der Bohrung 6 erstrecken, wobei sicher gestellt ist, dass in diesem Eckbereich die Seitenwände 3 nicht unterbrochen sind, also hier keine Öffnung für Funktionsmittel oder Auslassung für Kernmaterial vorgesehen wird. Um dies zu verdeutlichen ist durch einen Eckbereich und eine Bohrung 6 eine weitere Schnittdarstellung in Figur 3 gezeigt, dessen Verlauf mit B-B in Figur 2 angedeutet ist.

In dem in Figur 3 gezeigten Halbschnitt ist der vordere Bereich 1 der Platte, der für die Aufnahme einer Werkzeughälfte vorgesehen ist, zu sehen. Über die Seitenwand 3 und den Steg 4 ist der vordere Bereich 1 mit dem hinteren Bereich 2 der Platte verbunden. Der Steg 4 ist in der Nähe des vorderen Bereiches 1 der Platte mit einer Aussparung 5 versehen, wobei die Aussparung 5 so angeordnet ist, dass ein Teil der Bohrung 6 mit umfasst wird. Die Verbindung vom vorderen zum hinteren Bereich der Platte wird in diesem Teilbereich der Platte nur noch durch die Seitenwand 3 und dem verbleibenden Teil des Steges realisiert.

Die vorgeschlagene Ausgestaltung einer Platte ermöglicht es, eine Spritzgießmaschine anzubieten, bei der eine geringe Durchbiegung der Werkzeugaufspannplatten auftritt. Der Einsatz solcher Platten ist besonders bei Zwei-Platten-Maschinen von Vorteil.

### Bezugszeichenliste:

- 1: vorderer Bereich der Platte
- 2: hinterer Bereich der Platte
- 3: Seitenwand
- 4: Steg zwischen vorderem und hinterem Bereich der Platte
- 5: Aussparung in Steg 4
- 6: Bohrung für Holme
- 7: Öffnung in Seitenwand 3
- 8: Werkzeug
- 9: Mittelkern

## Patentansprüche

1. Platte, insbesondere Schließ- oder Düsenplatte, einer Spritzgießmaschine zur Aufnahme eines Werkzeuges, die
einen vorderen (1) und einen hinteren (2) Bereich umfasst, der über Seitenwände (3) und Stege (4) verbunden ist und
Bohrungen (6) für die Aufnahme von Holmen aufweist,
**dadurch gekennzeichnet, dass**
die Stege (4) mit mindestens einer Aussparung (5) versehen sind,
die sich bis in den Bereich der Bohrung (6) erstreckt.

2. Platte nach Anspruch 1, **dadurch gekennzeichnet, dass** die Aussparung (5) in der Nähe des vorderen (1) Bereiches der Platte angeordnet ist.

3. Platte nach Anspruch 2, **dadurch gekennzeichnet, dass** der vordere (1) Bereich der Platte für die Aufnahme eines Spritzgießwerkzeuges (8) vorgesehen ist.

4. Platte nach mindestens einem der Ansprüche 1 bis 3, **dadurch gekennzeichnet, dass** die Seitenwände (3) Öffnungen (7) aufweisen.

5. Platte nach mindestens einem der Ansprüche 1 bis 4, **dadurch gekennzeichnet, dass** die Stege (4) untereinander, vorzugsweise im vorderen (1) Bereich der Platte, verbunden sind.

6. Spritzgießmaschine, insbesondere Zwei-Platten-Spritzgießmaschine, mit mindestens einer Platte nach einem der Ansprüche 1 bis 5 zur Aufnahme mindestens einer Hälfte eines Spritzgießwerkzeuges.

## Claims

1. Platen, in particular closing or die platen, of an injection-moulding machine for receiving a mould, which comprises a front (1) and a rear (2) region, which is connected via side walls (3) and bars (4) and has bores (6) for receiving spars, **characterised in that** the bars (4) are provided with at least one recess (5), which extends into the region of the bore (6).

2. Platen according to claim 1, **characterised in that** the recess (5) is arranged in the vicinity of the front (1) region of the platen.

3. Platen according to claim 2, **characterised in that** the front (1) region of the platen is provided for receiving an injection mould (8).

4. Platen according to at least one of claims 1 to 3, **characterised in that** the side walls (3) have openings (7).

5. Platen according to at least one of claims I to 4, **characterised in that** the bars (4) are connected to one another, preferably in the front (1) region of the platen.

6. Injection-moulding machine, in particular two-platen injection-moulding machine, having at least one platen according to one of claims 1 to 5 for receiving at least one half of an injection mould.

## Revendications

1. Plateau, en particulier plateau de fermeture ou plateau à buses, d'une machine de moulage par injection, destiné à recevoir un outillage, comprenant une zone avant (1) et une zone arrière (2), reliées par des parois latérales (3) et des nervures (4) et présentant des alésages (6) destinés à recevoir des longerons,
**caractérisé en ce que**
les nervures (4) comportent au moins un évidement (5), s'étendant jusque dans la zone de l'alésage (6).

2. Plateau selon la revendication 1, **caractérisé en ce que** l'évidement (5) est situé à proximité de la zone avant (1).

3. Plateau selon la revendication 2, **caractérisé en ce que** la zone avant (1) du plateau est prévue pour recevoir un outillage de moulage par injection (8).

4. Plateau selon au moins l'une des revendications 1 à 3, **caractérisé en ce que** les parois latérales (3) présentent des ouvertures (7).

5. Plateau selon au moins l'une des revendications 1 à 4, **caractérisé en ce que** les nervures (4) sont reliées entre elles, de préférence dans la zone avant (1) du plateau.

6. Machine de moulage par injection, en particulier machine de moulage par injection à deux plateaux, comprenant au moins un plateau selon l'une des revendications 1 à 5, destiné à recevoir au moins une moitié d'un outillage de moulage par injection.
